# FASCICULE DE BREVET EUROPEEN

(11) **EP 1 186 493 B1**
(45) Date de publication et mention de la délivrance du brevet: **27.12.2006**
(21) Numéro de dépôt: 01203426.0
(22) Date de dépôt: 12.09.2001
(51) Int. Cl.: B60S 1/04

(54) **Agencement d'un dispositif d'essuie-glace**
Scheibenwischeranlage
Windscreen wiping assembly

(30) Priorité: 12.09.2000 FR 0011580; 28.03.2001 FR 0104608
(43) Date de publication de la demande: 13.03.2002
(73) Titulaire: VALEO SYSTEMES D'ESSUYAGE, 78321 La Verrière (FR)
(72) Inventeur: Eustache, Jean-Pierre, 92160 Antony (FR); Hospital, Eric, 86100 Chatellerault (FR); Trebouet, Marcel, 92400 Courbevoie (FR)

(56) Documents cités:
- DE-A- 4 314 435
- DE-U- 29 708 554
- GB-A- 721 465
- US-A- 5 381 582

## Description

La présente invention concerne un agencement d'un dispositif d'essuie-glace d'une vitre de véhicule automobile.

L'invention concerne plus particulièrement un agencement pour l'essuyage d'une vitre, notamment d'un pare-brise, du type comportant au moins un essuie-glace, animé d'un mouvement de balayage alterné rotatif ou linéaire de la vitre, qui comporte notamment une lame souple d'essuyage de la vitre qui est associée à au moins un élément structurel qui s'étend au-dessus de la lame d'essuyage.

Dans un tel essuie-glace, selon la conception la plus couramment répandue, l'élément structurel peut être constitué par des vertèbres de renfort du talon supérieur de la lame d'essuyage, qui est réalisée en élastomère, les vertèbres étant associées à une structure articulée de support de lame renforcée par les vertèbres, pour constituer un sous-ensemble généralement appelé balai d'essuie-glace.

Le balai d'essuie- glace peut être entraîné directement en balayage alterné ou être porté, de manière articulée, à l'extrémité libre d'un bras d'essuie-glace animé d'un mouvement linéaire ou rotatif alterné de balayage.

Selon une autre conception visant à réaliser des essuie-glace de faible hauteur, la structure articulée du balai d'essuie-glace est supprimée et ce sont les vertèbres, ou des éléments de renfort structurels équivalents aux vertèbres, qui sont associées à la lame d'essuyage souple pour constituer le balai d'essuie-glace proprement dit, aussi appelé "flat-blade", ce balai "réduit" de faible hauteur étant lui aussi entraîné en balayage par un mécanisme adéquat comportant le cas échéant un bras d'essuie-glace.

La lame d'essuyage, qui en section transversale se présente sous la forme d'un sapin ou d'une flèche renversée, coopère par son bord libre d'extrémité avec la surface de la vitre à essuyer. La lame d'essuyage est un élément déterminant en vue de l'obtention d'une bonne qualité d'essuyage. II est notamment souhaitable que la lame d'essuyage conserve ses qualités intrinsèques et ses caractéristiques de manière à assurer une grande durée de vie à la lame d'essuyage pour éviter que le propriétaire du véhicule n'ait à la remplacer trop souvent.

Afin d'améliorer la fiabilité de la lame d'essuyage, il a d'une part été proposé que, lorsque l'essuie-glace occupe une position de repos prolongée aussi appelée position de rangement ou de parking, la lame d'essuyage ne soit plus en contact, par son bord d'extrémité libre avec l'élément en vis-à-vis, c'est-à-dire soit avec une portion de la vitre en regard de laquelle elle se situe en position de parking, soit avec un élément de structure de caisse du véhicule ou de la carrosserie de ce dernier.

On a ainsi proposé différentes solutions aboutissant globalement à soulever ou à décaler verticalement la lame d'essuyage par rapport à l'élément en vis-à-vis.

Afin d'améliorer la fiabilité de la lame d'essuyage et d'éviter sa détérioration lorsque l'essuie-glace n'est pas utilisé, c'est-à-dire pendant la plus grande partie de la vie du véhicule, il est aussi souhaitable de pouvoir abriter la lame d'essuyage lorsqu'elle est en position de parking, en vue notamment de la préserver des intempéries, des pollutions extérieures, et du rayonnement ultraviolet.

Dans ce but, il a été proposé par exemple d'abriter au moins la lame d'essuyage dans un logement ou dans un puits aménagé en regard de la lame d'essuyage lorsque l'essuie-glace est dans sa position de parking.

Le document DE-U-297.08.554 décrit un logement pour une lame d'essuie-glace ayant un volet mobile pour amener le bras avec la lame de la position de repos à la position de fonctionnement. Le bras est entraîné le long de son axe d'entraînement pour être en suite entraîné en rotation pour réaliser l'essuyage.

Le document DE-A-43.14.4.35 décrit un agencement d'essuyage, comportant un système d'essuie-glace et un système de lavage. L'agencement d'essuyage est fixé sur un capot mobile et peut s'enfoncer dans la carrosserie du véhicule par une rotation autour d'un axe. Le capot est mobile :
- entre une position fermée dans laquelle l'agencement d'essuyage se trouve dans un logement, et
- une position ouverte qui amène l'agencement d'essuyage dans sa position d'utilisation.

Il est connu, d'obturer complètement la face ouverte du logement de rangement de l'essuie-glace au moyen d'un volet d'obturation qui est monté articulé sur la structure du véhicule de façon à éviter que les intempéries et les rayonnements ne pénètrent à l'intérieur du logement lorsque l'essuie-glace est dans sa position de parking.

De telles solutions faisant appel un volet monté mobile articulé sur le véhicule sont globalement complexes et encombrantes.

De façon à assurer une grande fiabilité de la lame d'essuyage tout en étant de conception simple, économique et peu encombrante, le demandeur a proposé un agencement d'un dispositif d'essuie-glace dans lequel le volet constitue un équipage mobile avec la lame d'essuyage.

Ainsi, un tel dispositif d'essuie-glace ne nécessite aucun moyen de commande de la position du volet comme c'est le cas dans les autres conceptions.

De façon à perfectionner une telle conception, notamment à faciliter la sortie de la lame du logement de rangement, l'invention propose un agencement d'un dispositif d'essuie-glace pour l'essuyage d'une vitre de véhicule automobile, notamment d'un pare-brise, du type comportant au moins un essuie-glace , animé d'un mouvement de balayage alterné de la vitre, qui comporte notamment un bras d'essuyage de la vitre qui est associé à au moins un élément structurel et qui comporte une lame inférieure d'essuyage, et du type dans lequel l'essuie-glace est susceptible d'occuper une position de parking dans laquelle au moins la lame d'essuyage est escamotée dans un logement de forme générale allongée selon la direction générale longitudinale de la lame et qui comporte une face supérieure ouverte par laquelle la lame d'essuyage est susceptible de pénétrer dans le logement lorsque l'essuie glace atteint sa position de parking, caractérisé en ce que le logement est équipé de moyens pour pousser la lame d'essuyage en dehors du logement, notamment lors du démarrage de l'essuie-glace.

Selon des modes de réalisation de l'invention :
- les moyens pour pousser la lame d'essuyage en dehors du logement comportent une paroi, formant éjecteur, qui est montée mobile entre une position de repos et une position d'éjection dans laquelle une face supérieure de la paroi d'éjection pousse la lame hors du logement ;
- la paroi d'éjection est un élément souple, tel qu'une membrane souple, qui s'étend au moins partiellement en vis-à-vis de la lame ;
- la paroi d'éjection est un élément rigide qui s'étend au moins partiellement en vis-à-vis de la lame ;
- la lame inférieure est de forme générale triangulaire dont un sommet de raclage coopère avec la surface de la vitre à essuyer et dont une face supérieure opposée au sommet de raclage est reliée à l'élément structurel par des moyens de liaison et d'articulation , constitués d'au moins une bande verticale de liaison pour permettre le pivotement de la lame d'essuyage autour d'un premier axe longitudinal de pivotement et la face supérieure d'éjection est inclinée autour d'un second axe longitudinal, sensiblement parallèle au premier axe longitudinal lorsque l'essuie glace est en position de parking, de façon à orienter transversalement la lame d'essuyage autour du premier axe longitudinal de pivotement lors de son éjection ;
- l'agencement comporte un dispositif d'actionnement et de guidage de la paroi entre ses positions de repos et d'éjection ;
- le dispositif d'actionnement comporte un moteur d'entraînement dont l'arbre de sortie coopère avec un organe complémentaire de la paroi d'éjection ;
- l'arbre de sortie comporte une première roue dentée qui engrène avec un élément complémentaire, tel qu'une seconde roue dentée ou une crémaillère, de l'organe complémentaire ;
- l'organe complémentaire comporte un dispositif de type vis-écrou qui est muni de la seconde roue dentée qui s'engrène avec la première roue dentée pour provoquer la translation de la paroi d'éjection ;
- l'arbre de sortie comporte une vis sans fin, et l'organe complémentaire présente des cannelures qui engrènent avec les creux de la vis sans fin de façon à provoquer la rotation de la paroi d'éjection autour d'un axe longitudinal, entre ses positions de repos et d'éjection ;
- l'organe complémentaire comporte au moins une bielle articulée dont une extrémité est entraînée en rotation par l'arbre de sortie du moteur ;
- le dispositif d'actionnement et de guidage comporte un vérin dont l'extrémité libre de sa tige ou de son corps est relié à la paroi d'éjection ;
- le dispositif d'actionnement et de guidage comporte un organe élastique qui est susceptible de rappeler la paroi d'éjection vers sa position d'éjection ;
- l'organe élastique est du type à mémoire de forme ;
- en position fermée, l'élément structurel constitue un volet de fermeture de la face supérieure ouverte du logement.

D'autres caractéristiques et avantages de l'invention apparaîtront à la lecture de la description détaillée qui suit pour la compréhension de laquelle on se reportera aux dessins annexés parmi lesquels :
- la figure 1 est une vue schématique en perspective de la partie avant d'un véhicule automobile dont le pare-brise est équipé d'un dispositif d'essuyage à balayage rotatif alterné ;
- la figure 2 est une vue schématique en perspective partielle sur laquelle, l'essuie-glace du dispositif d'essuyage, réalisé conformément à l'invention, est en vis-à-vis du logement de la lame d'essuyage ;
- la figure 3 est une vue schématique en perspective partielle similaire à celle représentée à la figure précédente, l'essuie-glace étant en position de parking et la lame d'essuyage étant représentée en position escamotée dans son logement ;
- la figure 4 est une vue schématique en perspective similaire à celles représentées aux figures 2 et 3, selon une variante de réalisation de l'invention, la lame d'essuyage étant poussée hors du logement par une paroi d'éjection ;
- les figures 5, 8, 11 et 15 sont des vues schématiques en perspective partielle qui illustrent différentes variantes de réalisation du dispositif d'actionnement et de guidage de la paroi d'éjection ;
- les figures 6 et 7 sont des vues schématiques en section transversale qui illustrent différentes variantes de réalisation du dispositif d'actionnement et de guidage de la paroi d'éjection ;
- les figures 9 et 10 sont des vues schématiques en section transversale du dispositif d'essuie-glace qui illustrent la lame d'essuyage et le dispositif d'actionnement et de guidage réalisé selon une autre variante de réalisation, en positions escamotée et sortie de la lame respectivement ;
- les figures 12 à 14 sont des vues schématiques en section transversale du dispositif d'essuie-glace qui illustrent différentes phases successives de l'escamotage et de l'éjection de la lame d'essuyage par un dispositif d'actionnement et de guidage réalisé selon encore une autre variante de réalisation de l'invention ;
- la figure 16 est une vue schématique en section transversale qui illustre un autre exemple de réalisation de la paroi d'éjection.

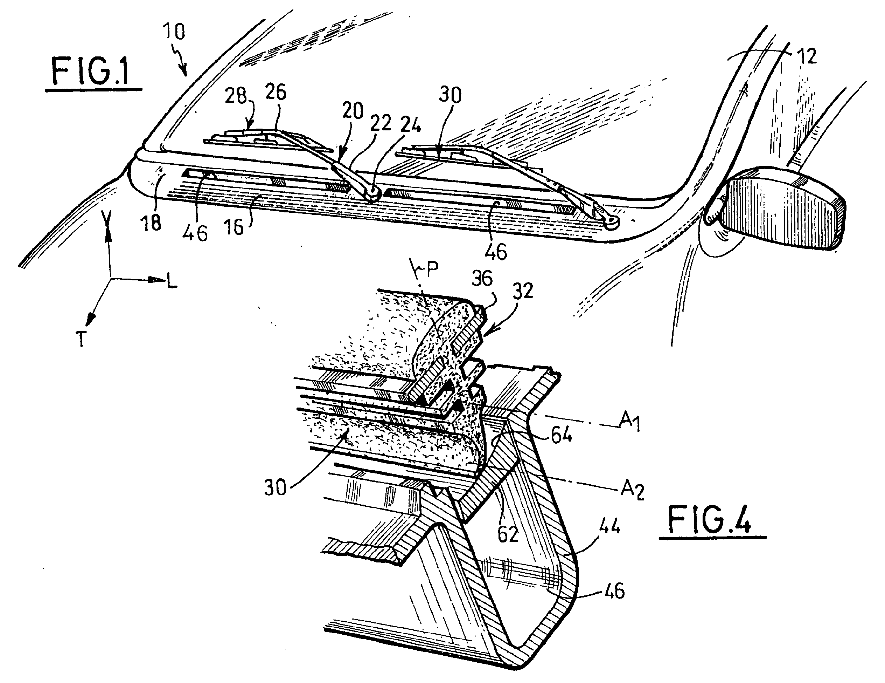

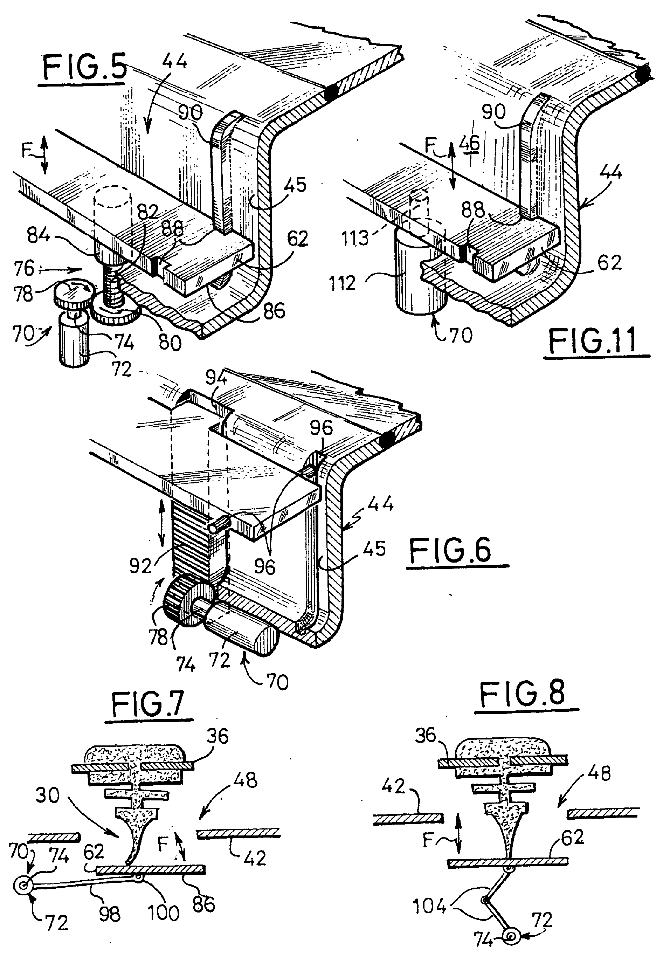

Dans la suite de la description une orientation verticale, transversale et longitudinale sera utilisée conformément à l'orientation des flèches V, T et L représentées notamment aux figures 1 et 5.

De plus, les éléments similaires ou identiques seront désignés par les mêmes chiffres de référence.

On reconnaît à la figure 1 une partie d'un véhicule automobile 10 comportant un pare-brise 12 dont le bord inférieur 14 est équipé d'un joint qui s'étend au-dessus d'un élément de support 18 qui comporte une grille d'auvent 16 et qui délimite en partie le compartiment moteur.

L'essuyage du pare-brise 12 est assuré par exemple au moyen de deux essuie-glaces 20.

Chaque essuie-glace 20 comporte, de manière connue, un bras d'essuie-glace 22 qui est monté à rotation autour d'un axe de balayage 24 et il porte, à son extrémité libre 26, un balai d'essuie-glace 28.

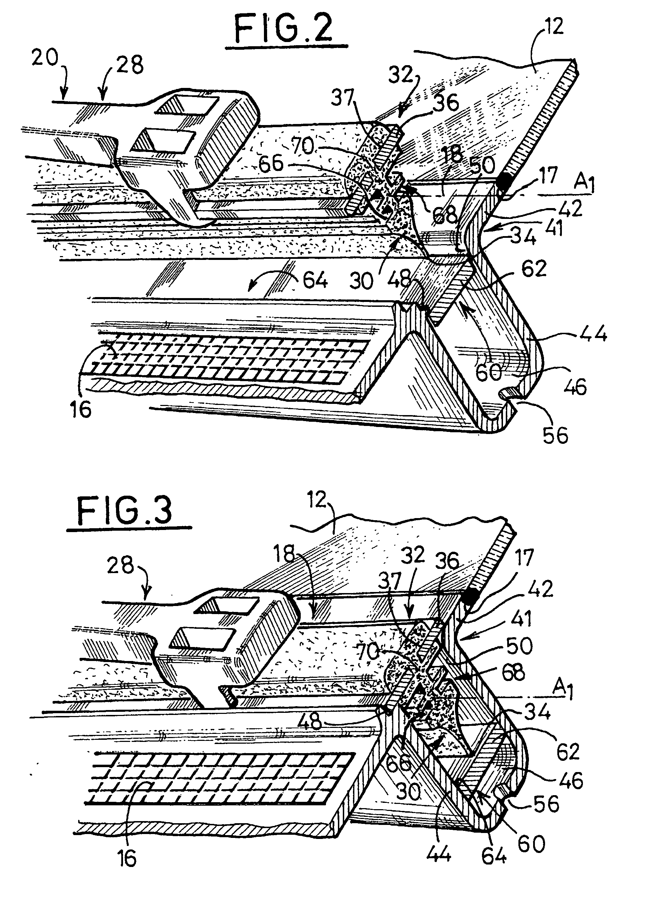

Comme on peut le voir notamment aux figures 2 et 3, le balai 28 est constitué pour l'essentiel par une lame inférieure d'essuyage 30 et par un élément structurel supérieur de renfort et de support 32 de la lame d'essuyage 30.

De manière connue, la lame d'essuyage 30 est en forme générale de flèche inversée et elle est délimitée par un bord longitudinal inférieur d'extrémité libre, appelé sommet de raclage 34, qui est prévu pour coopérer avec la surface extérieure du pare-brise 12 à essuyer, lorsque le bras 22 est entraîné à cet effet en un mouvement de balayage rotatif alterné.

L'élément structurel de renfort 32 se présente ici sous la forme de deux vertèbres longitudinales de rigidification 36 de section rectangulaire aplatie qui sont reçues dans des rainures 37 correspondantes aménagées respectivement dans chacune des deux faces latérales 40 du talon supérieur 38 de la lame d'essuyage 30.

Le balai d'essuie-glace 28 peut aussi être un balai de hauteur réduite, du type "flat blade". Dans ce cas l'élément structurel de renfort peut être un barreau d'orientation longitudinale qui chevauche le talon supérieur de la lame d'essuyage.

Comme on peut le voir aux figures 2 et 3, au voisinage du bord supérieur 17 de l'élément de support 18, il est prévu un boîtier fixe 41 comportant un cadre supérieur 42 et une gouttière inférieure interne fermée 44 de manière à délimiter un logement 46 qui, lorsque l'essuie-glace est dans sa position de parking représentée à la figures 3, reçoit la lame souple d'essuyage 30 dans une position escamotée.

C'est ici l'équipage mobile constitué par la lame d'essuyage 30 avec son élément structurel associé 32, 36 qui constitue le volet de fermeture de la face supérieure ouverte du logement 46, c'est-à-dire le volet de fermeture de la lumière ou fenêtre 48 délimitée par le cadre 42.

A cet effet, et comme on peut le voir notamment à la figure 2, les vertèbres longitudinales de rigidification 36 de l'élément structurel de renfort 32 s'étendent transversalement au-delà des bords longitudinaux parallèles et opposés 50 de la fenêtre 48.

Pour assurer une fermeture étanche de la face supérieure ouverte 48 du logement 46, chaque vertèbre longitudinale de rigidification 36 de l'élément structurel 32 est avantageusement équipée d'une garniture d'étanchéité.

Afin de permettre l'évacuation d'eau ou d'autres éléments polluants qui pénètrent dans le logement ou puits 46 lorsque l'essuie-glace est en fonctionnement, on peut prévoir avantageusement un ou plusieurs trous d'évacuation 56 dans le fond de la gouttière 44.

Selon une variante non représentée, la gouttière peut comporter dans sa partie supérieure des ouvertures ou des rainures qui permettent au liquide de lavage de la vitre et/ou à l'eau de pluie de pénétrer à l'intérieur de la gouttière puis d'être évacuée. Ainsi, les pollutions sont emportées par le liquide lors de son évacuation.

De façon à éviter la dégradation de la lame d'essuyage 30 par frottement de sa partie inférieure sur un élément autre que la surface vitrée que du pare-brise 12, tel que la grille d'auvent 16 lorsqu'elle est agencée entre le bord inférieur 14 du pare-brise 12 et le logement 46, l'essuie-glace 22 peut être guidé vers sa position de rangement de parking par une rampe qui est rapportée sur la grille.

Il peut aussi être prévu deux rampes agencées aux extrémités longitudinales opposées du logement 46 qui coopèrent avec les extrémités longitudinales correspondantes de l'élément structurel 32 pour soulever le balai d'essuie-glace 28, et donc la lame d'essuyage 30, lors de sa fin de course vers la position de parking, puis pour la guider afin qu'elle pénètre dans le logement 46 et pour que l'élément 32 vienne obturer la fenêtre ou lumière 48.

Ainsi, le volet de fermeture du puits 46 appartient au balai d'essuie-glace 28 avec lequel il forme un tout structurel et avec lequel il se déplace en balayage alterné lors de l'essuyage du pare-brise.

Cette conception ne nécessite donc aucun moyen de commande de la position du volet comme c'est le cas dans les conceptions selon l'état de la technique.

Conformément aux figures 2 et 3, le boîtier 41 ou une structure équivalente délimitant le logement ou puits 46 est réalisé moulé en une seule pièce avec la grille d'auvent 16.

Le dimensionnement du logement 46, et notamment sa profondeur, est tel que, en position escamotée de la lame d'essuyage 30 dans le puits 46 et lorsque les vertèbres longitudinales de rigidification 36 sont en appui contre le cadre 42, le bord d'extrémité libre inférieur 34 est éloigné de la paroi de fond en vis-à-vis 45 de la gouttière 44.

Conformément à l'invention, chaque logement 46 est équipé de moyens motorisés 60 pour pousser la lame d'essuyage 30 en dehors du logement 60, notamment lors du démarrage de l'essuie-glace 20 correspondant.

Les moyens 60 comportent une paroi 62, formant éjecteur, qui est montée mobile entre une position de repos, représentée à la figure 3 dans laquelle la lame d'essuyage 30 est en position escamotée, et une position d'éjection dans laquelle une face supérieure 64 de la paroi d'éjection 62 pousse la lame 30 hors du logement 60 vers sa position sortie.

Selon un premier mode de réalisation de l'invention, la paroi d'éjection 62 est un élément rigide qui s'étend au moins partiellement en vis-à-vis de la lame 30.

Ainsi, lorsque la lame 30 est en position escamotée, et que l'utilisateur du véhicule actionne des moyens de commande de l'essuie-glace 20, la paroi 62 pousse la lame 30 hors du logement 60 jusqu'à ce que le sommet de raclage 34 soit sensiblement au niveau de la face supérieure de l'élément de support 18. Le bras d'essuie-glace 22 peut alors être entraîné en rotation autour de l'axe de balayage 24, ou en balayage linéaire selon une variante non représentée.

Lorsque le cycle d'essuyage du pare-brise ou de la vitre 12 est terminé, le bras d'essuie-glace est en position de parking et la lame 30 est positionnée, en position sortie conformément à la figure 2, au-dessus de la paroi 62. Le bras 24 qui exerce un effort d'essuyage d'orientation sensiblement perpendiculaire à la paroi 62 plaque alors le sommet de raclage 34 sur la face supérieure 64 de la paroi 62.

Ensuite, des moyens d'actionnement et de guidage, non représentés sur les figures 2 et 3, provoquent la descente, à l'intérieur du logement 46, de la paroi 62 accompagnée de la lame de raclage 30, sur laquelle est exercée l'effort de placage du sommet de raclage 34.

La descente de la paroi 62 se poursuit sur une distance prédéterminée de façon que lorsque les vertèbres de rigidification 36 sont en contact avec la face supérieure en vis-à-vis de la portion correspondante du cadre 42, le sommet de raclage 34 n'est plus en appui sur la face supérieure 64 de la paroi d'éjection 62.

L'éjection de la lame 30 hors du logement 46, selon une variante, peut être réalisée lorsque l'utilisateur démarre le moteur du véhicule.

On peut aussi prévoir que la paroi d'éjection 62 pousse la lame 30 hors du logement 46 lorsque les portières du véhicule sont déverrouillées. Dans ce cas, la commande des moyens d'entraînement de la paroi d'éjection 62 est reliée électriquement à un système de fermeture centralisé du véhicule, notamment à une centrale d'antivol.

Ainsi, lorsque l'utilisateur actionne les moyens de commande de l'essuie-glace 20, le bras 24 peut être entraîné instantanément en rotation pour essuyer le pare-brise 12.

Ici, la lame 30 est de forme générale triangulaire dont un sommet de raclage 34 coopère avec la surface de la vitre 12 à essuyer. La face supérieure 66 opposée au sommet de raclage 34 est reliée à l'élément structurel 32 par des moyens 68 de liaison et d'articulation qui sont constitués d'une bande verticale de liaison pour permettre le pivotement de la lame d'essuyage 30 autour d'un premier axe A1 longitudinal de pivotement.

Lorsque la lame 30 est éjectée hors du logement 46, l'effort exercé par la paroi d'éjection 62, qui est sensiblement opposé à l'effort de placage du sommet de raclage 34, provoque une orientation de la lame 30 c'est-à-dire, un léger pivotement de la lame 30 autour de l'axe A1 ainsi qu'une déformation élastique de l'extrémité inférieure de la lame d'essuyage 30. Seule la déformation élastique de l'extrémité inférieure est représentée sur les figures.

Lorsque la lame 30 essuie la vitre 12, le sommet de raclage 34 doit avantageusement être situé globalement en arrière du plan P de symétrie du balai d'essuie-glace 24 par rapport au sens de déplacement du bras 22, de façon que le sommet de raclage 34 "traîne" en arrière du balai 24. Cela permet d'assurer une efficacité optimale de l'essuyage du pare-brise 12.

Cependant, l'orientation de la lame 30, c'est-à-dire le pivotement de lame 30 ainsi que la déformation élastique de son extrémité inférieure se produit de façon aléatoire.

En effet, la face supérieure 64 de la paroi d'éjection 62 étant sensiblement perpendiculaire au plan P de symétrie de la lame 30, l'orientation de celle-ci peut par exemple dépendre de la déformation permanente de la lame 30 provoquant alors sa dissymétrie par rapport au plan P, ou dépendre d'un défaut de perpendicuiarité de la face supérieure 64 par rapport au plan P.

Pour s'affranchir de ce caractère aléatoire, l'invention propose en variante que la face supérieure 64 d'éjection soit globalement inclinée autour d'un deuxième axe longitudinal A2 qui est sensiblement parallèle au premier axe A1 lorsque l'essuie-glace 20 est en position de parking, de façon à orienter transversalement la lame d'essuyage 30 lors de son éjection, conformément à la figure 4.

Ceci permet, lorsque l'essuie-glace 20 quitte sa position de parking pour essuyer le pare-brise 12, que la lame 30 soit correctement orientée, en évitant ainsi le "broutement" de la lame 30 ainsi que son changement d'orientation (qui est provoqué par le début du mouvement d'essuyage) qui produisent du bruit et qui diminuent l'efficacité d'essuyage de la vitre 12.

Dans la suite de la description, cette orientation avantageuse sera appelée position préférentielle de la lame 30.

Les figures 5 à 8 sont des vues schématiques en perspective ou en coupe partielle qui illustrent différents modes de réalisation du dispositif d'actionnement et de guidage 70 de la paroi d'éjection 62 entre ses positions de repos et d'éjection.

Le dispositif d'actionnement 70 peut comporter un moteur d'entraînement 72 dont l'arbre de sortie 74 d'axe vertical coopère avec un organe complémentaire 76 de la paroi d'éjection 62.

Le moteur d'entraînement 72 peut être un moteur électrique, hydraulique ou pneumatique.

Conformément à la figure 5, l'arbre de sortie 74 porte une première roue dentée ou pignon 78 qui engrène avec une seconde roue dentée 80 de l'organe complémentaire 76.

La rotation de la seconde roue dentée 80 provoque la rotation d'une tige filetée 82 qui coopère avec un organe taraudé 84 qui est ici fixé sur la face inférieure 86 de la paroi d'éjection 62.

La tige 82 et l'organe 84 de l'organe complémentaire 76 forment alors un dispositif de type vis-écrou.

L'organe taraudé 84 permet de transformer le mouvement de rotation de la seconde roue dentée 80 en un mouvement de translation selon la flèche F de la paroi d'éjection 62.

Par exemple, la rotation du pignon 78 dans le sens horaire provoque la rotation de la seconde roue dentée 80 dans le sens anti-horaire, ce qui entraîne la translation de la paroi 62 vers la position d'éjection.

La paroi 62 comporte des rainures 88, dont deux sont représentées à la figure 5, dans lesquelles s'engagent des nervures complémentaires 90 réalisées sur les faces latérales verticales internes 45 de la gouttière 44.

Selon une variante, représentée à la figure 6, le pignon 78, d'axe horizontal, engrène avec une crémaillère verticale 92 qui est solidaire de la paroi d'éjection 62. Ainsi, la rotation du pignon 78 dans le sens horaire provoque le mouvement de la paroi d'éjection vers sa position de repos. La crémaillère 92 s'étend avantageusement transversalement à l'intérieur d'une rainure 94 complémentaire qui est réalisée dans une face latérale 45 interne de la gouttière 44, ce qui permet aussi de guider le mouvement de la paroi 62.

De façon à renforcer le guidage, il est possible d'agencer deux doigts 96 horizontaux qui s'étendent transversalement à partir de la paroi 62 et qui coopèrent avec des rainures 96 complémentaires d'orientation verticale et parallèles à la rainure 94.

Selon la variante de la figure 7, l'arbre horizontal de sortie 74 du moteur d'entraînement 72 entraîne, directement ou par l'intermédiaire d'un réducteur non représenté, l'extrémité libre d'une bielle 98 dont l'autre extrémité libre 100 est montée articulée sous la face inférieure 86 de la paroi 62.

De façon à homogénéiser les efforts sur la paroi 62, des ressorts de rappel, non représentés, peuvent être interposés entre la paroi 62 et la structure du véhicule.

La paroi 62 est guidée, par des moyens non représentés, de façon à rester horizontale lors de son déplacement entre ses positions de repos et d'éjection.

La rotation du moteur 70 dans le sens anti-horaire provoque le déplacement de la paroi 62 selon un mouvement présentant une composante verticale ainsi qu'une composante horizontale transversale.

La composante verticale permet le déplacement de la paroi 62 vers sa position d'éjection et la composante horizontale permet d'orienter transversalement la lame 30 dans sa position préférentielle.

La figure 8 représente une autre variante dans laquelle l'arbre de sortie 74 du moteur 72 est relié à un embiellage 102 constitué de deux bielles 104 qui permettent la translation verticale de la paroi 62.

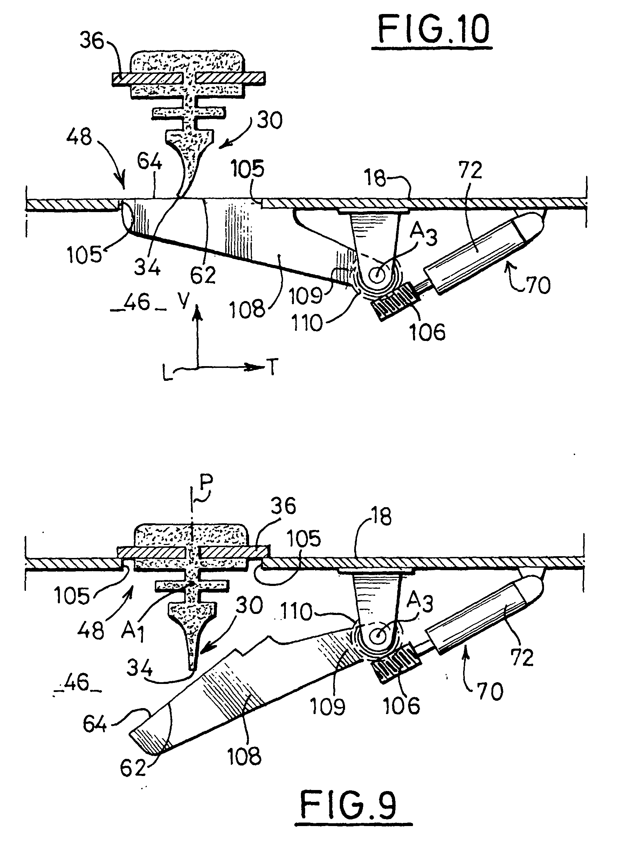

Les figures 9 et 10 représentent une variante dans laquelle la fenêtre 48 est formée entre deux bords adjacents 105 d'une tôle appartenant par exemple à l'élément de support 18 ou à un élément de carrosserie du véhicule.

Selon la variante, représentée en section transversale aux figures 9 et 10, l'arbre de sortie 74 du moteur d'entraînement 72 du dispositif 70 d'actionnement et de guidage comporte une vis sans fin 106.

La paroi d'éjection 62 consiste ici en un organe 108 dont une extrémité 109 est articulée autour d'un troisième axe horizontal A3 parallèle au premier axe A1, lorsque le bras 22 est en position de parking.

L'organe 108 est lié en rotation à une roue cannelée 110 qui est centrée sur l'axe A3 et qui engrène avec les filets de la vis sans fin 106 de façon à provoquer la rotation de la paroi d'éjection 62 de l'organe 108 autour de l'axe A3.

Ainsi, la paroi d'éjection 62 passe de sa position de repos représentée à la figure 9 à sa position d'éjection représentée à la figure 10 de façon à pousser la lame 30 hors de la fenêtre 48.

L'inclinaison de la face supérieure 64 de la paroi d'éjection 62 par rapport au plan P de symétrie de la lame 30 au cours de l'éjection de la lame 30 permet de l'orienter dans sa position préférentielle conformément à la figure 10.

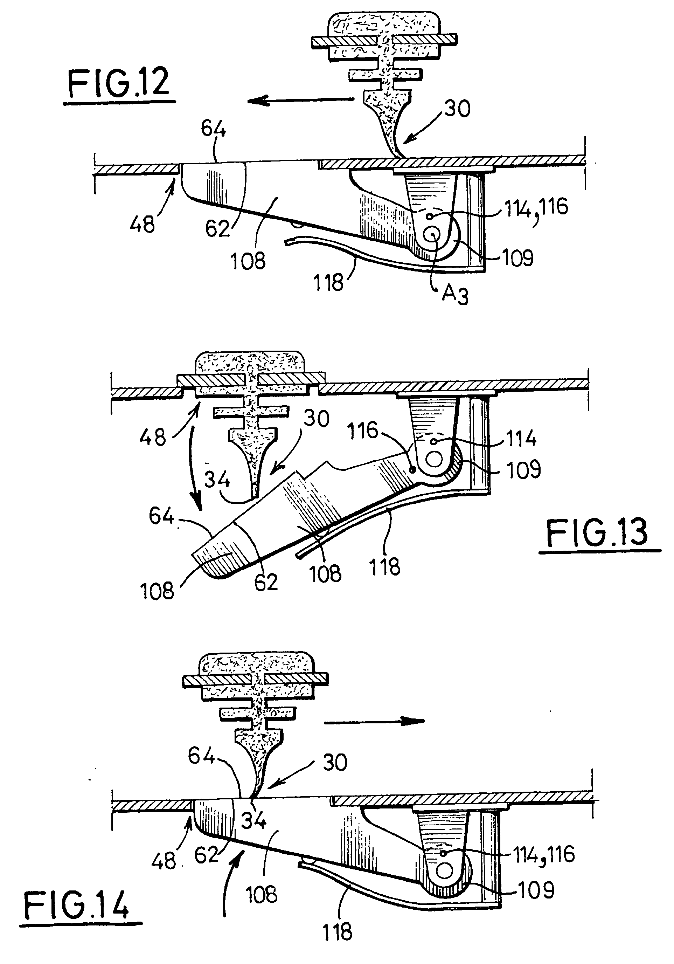

Selon une autre variante représentée à la figure 11, le dispositif d'actionnement et de guidage 70 comporte un vérin 112 dont le corps est ici fixe par rapport à la gouttière 44 et dont l'extrémité libre de la tige 113 est reliée à la paroi d'éjection 62.

Ainsi, la sortie et la rentrée de la tige 113 dans le corps permettent le mouvement de la paroi d'éjection 62 entre ses positions de repos et d'éjection de façon à sortir ou à escamoter la lame d'essuyage 30. On peut bien entendu prévoir une paire de vérins parallèles agencés aux extrémités opposées de la plaque 62. Le vérin 112 peut être un vérin pneumatique, hydraulique ou électrique.

Les figures 12 à 14 représentent le positionnement du bras 22 vers la position de parking, le mouvement de la lame 30 vers la position escamotée et l'éjection de la lame 30 vers la position sortie respectivement.

De façon similaire aux figures 9 et 10, le dispositif d'actionnement et de guidage 70 comporte un organe articulé 108 qui porte la paroi d'éjection 62.

Lorsque la paroi d'éjection 62 est en position d'éjection, conformément à la figure 12, la position de l'organe articulé 108 est verrouillée par un dispositif constitué d'un pion ou doigt escamotable 114 qui est agencé sur une partie fixe du véhicule et qui coopère avec une forme en creux complémentaire 116 réalisée dans l'organe 108, à proximité de son extrémité 109 articulée autour du troisième axe A3.

Lorsque la lame d'essuyage 30 doit être escamotée, le doigt 114 est dégagé hors de la forme en creux 116 de façon à permettre la rotation de l'organe 108.

La rotation de l'organe 108 est provoquée d'une part par son propre poids et, d'autre part, par l'effort sensiblement vertical exercé par le bras 22 sur la lame 30.

L'organe 108 est ici arrêté en rotation par un organe élastique 118 qui est dans une position inférieure, conformément à la figure 13.

L'organe élastique 118 est bistable entre la position inférieure et une position supérieure.

Ainsi, lorsque la lame 30 est en position escamotée, il existe un léger jeu entre la face supérieure 64 de la paroi d'escamotage 62 et le sommet de raclage 34 de la lame 30.

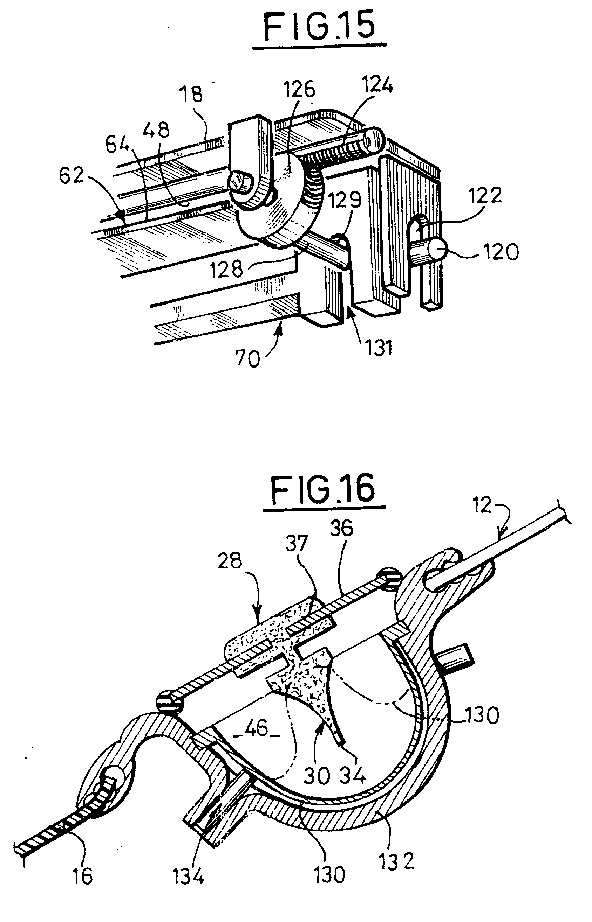

Conformément à la figure 14, l'organe élastique 118 est en position supérieure. Il permet ainsi de provoquer la rotation de l'organe 108 vers la position sortie de la paroi 62. Pour ce faire, l'organe élastique 118 est du type à mémoire de forme.

Par exemple sa forme est modifiée en fonction de sa température.

Ainsi, selon sa température, l'organe élastique 118 est mobile entre la position inférieure et la position supérieure représentées aux figures 13 et 14 respectivement.

L'éjection de la lame 30 consiste alors à provoquer le mouvement de l'organe élastique 118 vers sa position supérieure de façon à rappeler la paroi d'éjection 62 vers sa position d'éjection.

Lorsque la paroi 62 est en position d'éjection, le doigt 114 est actionné de façon à pénétrer dans la forme en creux 116 complémentaire, pour verrouiller la position de l'organe 108.

La figure 15 représente une autre variante selon laquelle la paroi d'éjection 62 est mobile en translation entre sa position de repos et sa position d'éjection.

La figure 15 représente une seule extrémité longitudinale de la paroi d'éjection 62 et du dispositif d'actionnement 70, l'autre extrémité étant similaire.

La paroi d'éjection 62 est guidée en translation par des doigts 120, dont un seul est représenté, qui s'étendent axialement à chaque extrémité longitudinale de la paroi 62 et qui sont guidées dans des fentes ou lumières complémentaires fixes 122.

Pour améliorer le guidage de la paroi d'éjection 62, il est possible de prévoir un ou plusieurs dispositifs similaires répartis le long de la paroi d'éjection 62. Dans ce cas, les doigts de guidage peuvent s'étendent transversalement à la paroi d'éjection 62.

Le dispositif d'actionnement 70 comporte une crémaillère 124 qui s'étend axialement à proximité de l'élément de support 18, de façon que ses extrémités libres dentées 124 entraînent en rotation un pignon denté complémentaire 126 sur lequel un doigt transversal 128 est fixé de façon excentrée par rapport à l'axe de rotation du pignon 126 et parallèle à ce dernier.

Le pignon 126 est monté à rotation autour d'un axe fixe par rapport à la structure du véhicule ou à une partie de la structure du véhicule.

Le doigt transversal 128 est reçu dans une lumière 131 et est au contact d'un fond supérieur 129 de la lumière 131 solidaire de la face inférieure de la paroi 62.

Ainsi, la translation de la crémaillère 124 provoque la rotation du pignon denté complémentaire 126 ainsi, que du doigt transversal 128 de façon à provoquer la translation de la paroi 62 entre ses positions de repos et d'éjection.

De façon à favoriser la descente de la paroi 62 vers sa position de repos, il est possible d'interposer un ressort de rappel, non représenté, entre la structure du véhicule et une zone de la paroi 62.

Avantageusement, lors de l'éjection de la lame d'essuyage hors de la fenêtre 48, le sommet de raclage de la lame d'essuyage glisse sur la face supérieure 64 de la paroi d'éjection 62. Ainsi, en position sortie, la lame est orientée dans sa position préférentielle, conformément à la figure 14.

II est aussi possible d'effectuer un traitement de la lame d'essuyage 30, c'est-à-dire de sa partie inférieure active, lorsque celle-ci est en position escamotée dans le logement 46.

Un tel traitement consiste à mettre les surfaces actives de la lame 30 en contact avec un produit, sous la forme de liquide ou d'un gel, permettant de régénérer le matériau constitutif de la lame ou de déposer sur ses surfaces des produits de traitement de surface.

Il peut par exemple s'agir de produits hydratants ou d'un produit d'halogénation.

Lorsque le boîtier qui délimite la chambre 46 est étanche, le produit de traitement peut être un liquide contenu dans le fond du logement 46 qui constitue alors un bain de traitement.

Le produit de traitement peut aussi être sous forme d'un gel contenu dans le logement 46.

Selon une autre conception, il est possible d'aménager dans le boîtier qui délimite le logement 46 des moyens d'aspersion de la lame 30 avec le produit de traitement.

Selon un second mode de réalisation, la paroi d'éjection 62 est un élément souple, tel qu'une membrane souple gonflable 130, qui s'étend au moins partiellement en vis-à-vis de la lame 30.

La fenêtre 48 est ici formée entre un bord de la vitre 12 et un bord appartenant à la grille 16, ces deux bords étant ici reliés entre eux par une garniture 132 qui délimite le logement 46.

La membrane souple 130 est représentée au repos en traits pleins à la figure 15 dans une position de laquelle le logement 46 est entièrement dégagé.

En injectant de l'air sous la membrane 130, par exemple par des orifices 134, on peut "gonfler" cette membrane, de façon à ce qu'elle se déploie dans le logement 46.

Si la lame d'essuyage 30 n'est pas présente dans le logement 46, le gonflement de la membrane 130 peut être complet et elle constitue alors un moyen de fermeture du logement 46 afin d'éviter que celui-ci ne se remplisse de liquide et/ou d'éléments polluants lors du fonctionnement de l'essuie-glace.

Si la lame d'essuyage souple 30 est présente dans le logement 46 au moment du gonflement, celle-ci va venir épouser le profil externe de la lame d'essuyage 30.

Si la face externe de la membrane 130 a été préalablement revêtue d'un gel de traitement, la membrane va alors effectuer un dépôt du gel sur les faces latérales en vis-à-vis et sur le bord d'extrémité libre 34 de la lame d'essuyage 30.

Le gonflement de la membrane 130 permet ainsi, lors du démarrage de l'essuie-glace, de pousser la lame d'essuyage 30 en dehors du logement 46.

La description qui précède n'est pas limitative. En effet, des inversions mécaniques telles qu'une permutation des rainures 88 et des nervures 90 du dispositif d'actionnement et de guidage 70, ou des équivalents peuvent être mis en oeuvre sans sortir du cadre de l'invention telle que définie dans les revendications.

## Revendications

1. Agencement d'un dispositif d'essuie-glace pour l'essuyage d'une vitre (12) de véhicule automobile (10), notamment d'un pare-brise, du type comportant au moins un essuie-glace (20), animé d'un mouvement de balayage alterné de la vitre (12), qui comporte notamment un bras d'essuyage de la vitre (12) qui est associé à au moins un élément structurel (32) et qui comporte une lame inférieure d'essuyage (30), et du type dans lequel l'essuie-glace (20) est susceptible d'occuper une position de parking dans laquelle au moins la lame d'essuyage (30) est escamotée dans un logement (46) de forme générale allongée selon la direction générale longitudinale de la lame (30) et qui comporte une face supérieure ouverte par laquelle la lame d'essuyage (30) est susceptible de pénétrer dans le logement (46) lorsque l'essuie-glace (20) atteint sa position de parking, **caractérisé en ce que** le logement (46) est équipé de moyens pour pousser la lame d'essuyage (30) en dehors du logement (46), notamment lors du démarrage de l'essuie-glace (20).

2. Agencement d'un dispositif d'essuie-glace selon la revendication précédente, **caractérisé en ce que** les moyens pour pousser la lame d'essuyage (30) en dehors du logement (46) comportent une paroi (62), formant éjecteur, qui est montée mobile entre une position de repos et une position d'éjection dans laquelle une face supérieure (64) de la paroi d'éjection (62) pousse la lame (30) hors du logement (46).

3. Agencement d'un dispositif d'essuie-glace selon la revendication précédente, **caractérisé en ce que** la paroi d'éjection (30) est un élément souple, tel qu'une membrane (130) souple, qui s'étend au moins partiellement en vis-à-vis de la lame (30).

4. Agencement d'un dispositif d'essuie-glace selon la revendication 2, **caractérisé en ce que** la paroi d'éjection (62) est un élément rigide qui s'étend au moins partiellement en vis-à-vis de la lame (30).

5. Agencement d'un dispositif d'essuie-glace selon la revendication précédente, **caractérisé en ce que** la lame (30) inférieure est de forme générale triangulaire dont un sommet de raclage (34) coopère avec la surface de la vitre (12) à essuyer et dont une face supérieure (66) opposée au sommet de raclage (34) est reliée à l'élément structurel (32) par des moyens de liaison et d'articulation (68), constitués d'au moins une bande verticale de liaison pour permettre le pivotement de la lame d'essuyage (30) autour d'un premier axe (A1) longitudinal de pivotement et **en ce que** la face supérieure (64) d'éjection est inclinée autour d'un second axe (A2) longitudinal, sensiblement parallèle au premier axe (A1) longitudinal lorsque l'essuie-glace (20) est en position de parking, de façon à orienter transversalement la lame d'essuyage (30) autour du premier axe (A1) longitudinal de pivotement lors de son éjection.

6. Agencement d'un dispositif d'essuie-glace selon l'une des revendications 4 ou 5, **caractérisé en ce qu'**il comporte un dispositif (70) d'actionnement et de guidage de la paroi (62) entre ses positions de repos et d'éjection.

7. Agencement d'un dispositif d'essuie-glace selon la revendication précédente, **caractérisé en ce que** le dispositif (70) d'actionnement comporte un moteur d'entraînement (72) dont l'arbre de sortie (74) coopère avec un organe complémentaire (76) de la paroi d'éjection (62).

8. Agencement d'un dispositif d'essuie-glace selon la revendication précédente, **caractérisé en ce que** l'arbre de sortie (74) comporte une première roue dentée (78) qui engrène avec un élément complémentaire, tel qu'une seconde roue dentée (80) ou une crémaillère (92), de l'organe complémentaire (76).

9. Agencement d'un dispositif d'essuie-glace selon la revendication précédente, **caractérisé en ce que** l'organe complémentaire (76) comporte un dispositif de type vis-écrou qui est muni de la seconde roue dentée (80) qui s'engrène avec la première roue dentée (78) pour provoquer la translation de la paroi d'éjection (62).

10. Agencement d'un dispositif d'essuie-glace selon la revendication 7, **caractérisé en ce que** l'arbre de sortie (74) comporte une vis sans fin (106), et **en ce que** l'organe complémentaire (76) présente des cannelures (110) qui engrènent avec les creux de la vis sans fin (106) de façon à provoquer la rotation de la paroi d'éjection (62) autour d'un axe longitudinal, entre ses positions de repos et d'éjection.

11. Agencement d'un dispositif d'essuie-glace selon la revendication 7, **caractérisé en ce que** l'organe complémentaire (76) comporte au moins une bielle (98, 104) articulée dont une extrémité est entraînée en rotation par l'arbre de sortie (74) du moteur (72).

12. Agencement d'un dispositif d'essuie-glace selon la revendication 6, **caractérisé en ce que** le dispositif (70) d'actionnement et de guidage comporte un vérin (112) dont l'extrémité libre de sa tige ou de son corps est relié à la paroi d'éjection (62).

13. Agencement d'un dispositif d'essuie-glace selon la revendication 6, **caractérisé en ce que** le dispositif (70) d'actionnement et de guidage comporte un organe élastique (118) qui est susceptible de rappeler la paroi d'éjection (62) vers sa position d'éjection.

14. Agencement d'un dispositif d'essuie-glace selon la revendication précédente, **caractérisé en ce que** l'organe élastique (118) est du type à mémoire de forme.

15. Agencement d'un dispositif d'essuie-glace selon l'une quelconque des revendications précédentes, **caractérisé en ce que**, en position fermée, l'élément structurel (32) constitue un volet de fermeture de la face supérieure ouverte du logement (46).

## Claims

1. An arrangement of a wiper device for wiping a glass pane (12) of a motor vehicle (10), in particular a windscreen, of the type comprising at least one wiper (20), driven with a movement for alternate sweeping of the glass pane (12), which comprises in particular an arm for wiping the glass pane (12) which is associated with at least one structural element (32) and which comprises a lower wiping blade (30), and of the type in which the wiper (20) is capable of occupying a parking position in which at least the wiping blade (30) is retracted into a housing (46) of overall elongated shape in the overall longitudinal direction of the blade (30) and which comprises an open upper face by which the wiping blade (30) is capable of entering the housing (46) when the wiper (20) reaches its parking position, **characterised in that** the housing (46) is equipped with means for pushing the wiping blade (30) outside the housing (46), in particular at the time of starting the wiper (20).

2. An arrangement of a wiper device according to the preceding claim, **characterised in that** the means for pushing the wiping blade (30) outside the housing (46) comprise a wall (62), forming an ejector, which is mounted able to move between a rest position and an ejection position in which an upper face (64) of the ejection wall (62) pushes the blade (30) out of the housing (46).

3. An arrangement of a wiper device according to the preceding claim, **characterised in that** the ejection wall (30) is a flexible element, such as a flexible membrane (130), which extends at least partially opposite the blade (30).

4. An arrangement of a wiper device according to Claim 2, **characterised in that** the ejection wall (62) is a rigid element which extends at least partially opposite the blade (30).

5. An arrangement of a wiper device according to the preceding claim, **characterised in that** the lower blade (30) is of overall triangular shape whereof a scraping tip (34) cooperates with the surface of the glass pane (12) to be wiped and whereof an upper face (66) opposite to the scraping tip (34) is connected to the structural element (32) by connection and articulation means (68), consisting of at least one vertical connecting strip in order to allow the pivoting of the wiping blade (30) about a first longitudinal pivoting axis (A1), and **in that** the upper ejection face (64) is inclined about a second longitudinal axis (A2), substantially parallel to the first longitudinal axis (A1) when the wiper (20) is in the parking position, so as to transversely orient the wiping blade (30) about the first longitudinal pivoting axis (A1) at the time of its ejection.

6. An arrangement of a wiper device according to either of Claims 4 or 5, **characterised in that** it comprises a device (70) for activating and guiding the wall (62) between its rest and ejection positions.

7. An arrangement of a wiper device according to the preceding claim, **characterised in that** the activation device (70) comprises a drive motor (72) whereof the output shaft (74) cooperates with a complementary member (76) of the ejection wall (62).

8. An arrangement of a wiper device according to the preceding claim, **characterised in that** the output shaft (74) comprises a first toothed wheel (78) which engages with a complementary element, such as a second toothed wheel (80) or a rack (92), of the complementary member (76).

9. An arrangement of a wiper device according to the preceding claim, **characterised in that** the complementary member (76) comprises a nut & bolt type device which is provided with the second toothed wheel (80) which meshes with the first toothed wheel (78) in order to cause the translational movement of the ejection wall (62).

10. An arrangement of a wiper device according to Claim 7, **characterised in that** the output shaft (74) comprises a worm (106), and **in that** the complementary member (76) has serrations (110) which engage with the recesses in the worm (106) so as to cause the rotation of the ejection wall (62) about a longitudinal axis, between its rest and ejection positions.

11. An arrangement of a wiper device according to Claim 7, **characterised in that** the complementary member (76) comprises at least one articulated connecting rod (98, 104) whereof one end is driven rotationally by the output shaft (74) of the motor (72).

12. An arrangement of a wiper device according to Claim 6, **characterised in that** the activation and guidance device (70) comprises a cylinder (112) whereof the free end of its rod or of its body is connected to the ejection wall (62).

13. An arrangement of a wiper device according to Claim 6, **characterised in that** the activation and guidance device (70) comprises an elastic member (118) which is capable of returning the ejection wall (62) to its ejection position.

14. An arrangement of a wiper device according to the preceding claim, **characterised in that** the elastic member (118) is of the shape memory type.

15. An arrangement of a wiper device according to any one of the preceding claims, **characterised in that**, in the closed position, the structural element (32) constitutes a flap for closing the open upper face of the housing (46).

## Patentansprüche

1. Gestaltung einer Scheibenwischvorrichtung zum Wischen einer Scheibe (12) eines Automobils (10), insbesondere einer Windschutzscheibe, von der Art mit mindestens einem Scheibenwischer (20), der von einer abwechselnden Bewegung zur Abtastung der Scheibe (12) angetrieben wird, die insbesondere einen Wischarm für die Scheibe (12) umfaßt, der mit mindestens einem Strukturelement (32) verbunden ist, und der ein unteres Wischblatt (30) umfaßt, und von der Art, bei der der Scheibenwischer (20) eine Parkstellung einnehmen kann, in der mindestens das Wischblatt (30) in eine Ausnehmung (46) von allgemein länglicher Form gemäß der allgemeinen Längsrichtung des Wischblatts (30) eingezogen werden kann, und die eine offene Oberseite umfaßt, durch die das Wischblatt (30) in die Ausnehmung (46) eintreten kann, wenn der Scheibenwischer (20) seine Parkstellung erreicht, **dadurch gekennzeichnet, daß** die Ausnehmung (46) mit Mitteln ausgerüstet ist, mit denen das Wischblatt (30) insbesondere beim Start des Scheibenwischers (20) aus der Ausnehmung (46) gedrückt wird.

2. Gestaltung einer Scheibenwischvorrichtung nach dem vorstehenden Anspruch, **dadurch gekennzeichnet, daß** die Mittel zum Herausdrücken des Wischblatts (30) aus der Ausnehmung (46) eine Wand (62) umfassen, die einen Auswerfer bildet, die zwischen einer Ruhestellung und einer Auswurfstellung beweglich montiert ist, in der eine Oberseite (64) der Auswurfwand (62) das Wischblatt (30) aus der Ausnehmung (46) drückt.

3. Gestaltung einer Scheibenwischvorrichtung nach dem vorstehenden Anspruch, **dadurch gekennzeichnet, daß** die Auswurfwand (62) ein geschmeidiges Element ist, wie eine geschmeidige Membran (130), die sich mindestens teilweise gegenüber dem Wischblatt (30) erstreckt.

4. Gestaltung einer Scheibenwischvorrichtung nach Anspruch 2, **dadurch gekennzeichnet, daß** die Auswurfwand (62) ein starres Element ist, das sich mindestens teilweise gegenüber dem Wischblatt (30) erstreckt.

5. Gestaltung einer Scheibenwischvorrichtung nach dem vorstehenden Anspruch, **dadurch gekennzeichnet, daß** das untere Wischblatt 30 eine allgemeine Dreiecksform hat, deren Schaboberteil (34) mit der Fläche der zu wischenden Scheibe (12) zusammenarbeitet, und deren eine dem Schaboberteil (34) entgegengesetzte Oberseite (66) mit dem Strukturelement (32) mit Verbindungs- und Gelenkmitteln (68) verbunden ist, die aus mindestens einem senkrechten Verbindungsstreifen bestehen, damit das Wischblatt (30) um eine erste Längsdrehachse (A1) schwenken kann, und **dadurch**, daß die Auswurfoberseite (64) um eine zweite Längsachse (A2) geneigt ist, die deutlich parallel zur ersten Achse (A1) verläuft, wenn der Scheibenwischer (20) in Parkstellung ist, damit das Wischblatt (30) um die erste Längsdrehachse (A1) bei ihrem Auswurf quer ausgerichtet wird.

6. Gestaltung einer Scheibenwischvorrichtung nach einem beliebigen der vorstehenden Ansprüche 4 oder 5, **dadurch gekennzeichnet, daß** sie eine Betätigungs- und Führungsvorrichtung (70) der Wand (62) zwischen ihrer Ruhe- und ihrer Auswurfposition umfaßt.

7. Gestaltung einer Scheibenwischvorrichtung nach dem vorstehenden Anspruch, **dadurch gekennzeichnet, daß** die Betätigungsvorrichtung (70) einen Antriebsmotor (72) umfaßt, dessen Abtriebswelle (74) mit einem ergänzenden Organ (76) der Auswurfwand (62) zusammenarbeitet.

8. Gestaltung einer Scheibenwischvorrichtung nach dem vorstehenden Anspruch, **dadurch gekennzeichnet, daß** die Abtriebswelle (74) ein erstes Zahnrad (78) umfaßt, das mit einem ergänzenden Element, wie ein zweites Zahnrad (80) oder einer Zahnstange (92) des ergänzenden Organs (76) greift.

9. Gestaltung einer Scheibenwischvorrichtung nach dem vorstehenden Anspruch, **dadurch gekennzeichnet, daß** das ergänzende Organ (76) eine Vorrichtung von der Art Schraube-Schraubenmutter umfaßt, die mit dem zweiten Zahnrad (80) versehen ist, die mit dem ersten Zahnrad (78) greift, um die Querbewegung der Auswurfwand (62) auszulösen.

10. Gestaltung einer Scheibenwischvorrichtung nach Anspruch 7, **dadurch gekennzeichnet, daß** die Abtriebswelle (74) eine Schnecke (106) umfaßt, und **dadurch**, daß das ergänzende Organ (76) Rillen (110) aufweist, die so mit den Hohlstellen der Schnecke (106) greifen, daß die Drehung der Auswurfwand (62) um eine Längsachse zwischen ihrer Ruhe- und ihrer Auswurfposition ausgelöst wird.

11. Gestaltung einer Scheibenwischvorrichtung nach Anspruch 7, **dadurch gekennzeichnet, daß** das ergänzende Organ (76) mindestens ein Pleuel (98, 104) mit Gelenk umfaßt, von dem ein Ende durch die Abtriebswelle (74) des Motors (72) in Drehung versetzt wird.

12. Gestaltung einer Scheibenwischvorrichtung nach Anspruch 6, **dadurch gekennzeichnet, daß** die Betätigungs- und Führungsvorrichtung (70) einen Zylinder (112) umfaßt, dessen freies Ende seiner Spindel oder seines Körpers mit der Auswurfwand (62) verbunden ist.

13. Gestaltung einer Scheibenwischvorrichtung nach Anspruch 6, **dadurch gekennzeichnet, daß** die Betätigungs- und Führungsvorrichtung (70) ein elastisches Organ (118) umfaßt, das die Auswurfwand (62) zu ihrer Auswurfstellung zurückholen kann.

14. Gestaltung einer Scheibenwischvorrichtung nach dem vorstehenden Anspruch, **dadurch gekennzeichnet, daß** das elastische Organ (118) von der Art mit Formgedächtnis ist.

15. Gestaltung einer Scheibenwischvorrichtung nach einem beliebigen der vorstehenden Ansprüche, **dadurch gekennzeichnet, daß** das Strukturelement (32) in geschlossener Position eine Verschlußklappe der offenen Oberseite der Ausnehmung (46) bildet.
